# EUROPEAN PATENT APPLICATION

(11) **EP 4 696 747 A1**
(43) Date of publication of application: **18.02.2026**
(21) Application number: 24789030.4
(22) Date of filing: 11.04.2024
(51) Int. Cl.: C08L 67/04, C08G 63/06, C08G 63/08, C08J 5/18

(54) **BIODEGRADABLE RESIN COMPOSITION, BIODEGRADABLE FILM USING SAME, AND METHOD FOR PRODUCING SAME**

(30) Priority: 14.04.2023 KR 20230049208
(71) Applicant: SK microworks Co., Ltd., Chungcheongbuk-do 27818 (KR)
(72) Inventor: YEON, Jewon, Suwon-si, Gyeonggi-do 16336 (KR); OH, Mi Ok, Suwon-si, Gyeonggi-do 16336 (KR); PARK, Sang Kuk, Suwon-si, Gyeonggi-do 16336 (KR); HAN, Kweon Hyung, Suwon-si, Gyeonggi-do 16336 (KR)
(74) Representative: Dehns
(86) International application number: PCT/KR2024/004811
(87) International publication number: WO 2024/215088

(57) **Abstract**

This embodiment relates to a biodegradable resin composition, a biodegradable film using same, and a method for producing same, wherein the biodegradable resin composition comprises: a polylactic acid (PLA) resin; and a polyhydroxyalkanoate (PHA) resin. The PHA resin comprises: a first PHA resin comprising a 3-hydroxyhexanoate (3HH) repeating unit; and a second PHA resin comprising a 4-hydroxybutyrate (4HB) repeating unit, such that the biodegradability, stretchability, and strength of the biodegradable film can all be improved. Accordingly, the biodegradable resin composition according to this embodiment has excellent biodegradability and biocompatibility, and thus is environmentally friendly and can secure sufficient stretchability and strength thereof to produce a stretchable film, thereby being utilized in the production of various products that require moldability, such as packaging materials for disposable bags or food containers, and exhibiting excellent properties.

## Description

### Technical Field

Embodiments relate to a biodegradable resin composition, a biodegradable film prepared using the biodegradable resin composition, and a process for preparing the biodegradable resin composition.

### Background Art

As concerns about environmental issues have increased in recent years, there is a need for a solution to the problem of dealing with various household products, in particular, disposable products. Specifically, since polymeric materials are inexpensive and excellent in such characteristics as processability, they are widely used to manufacture various products such as films, fibers, packaging materials, bottles, containers, and the like. However, they have disadvantages in that harmful substances are discharged if products are incinerated when the lifespan thereof is over; and that it takes hundreds of years for them to be completely decomposed naturally depending on the type thereof when they are landfilled.

In order to overcome the limitations of these polymer materials, studies on biodegradable polymers that are environmentally friendly and can be decomposed in a faster time are being actively conducted. Although polylactic acid (PLA), polybutylene adipate terephthalate (PBAT), polybutylene succinate (PBS), polybutylene succinate terephthalate (PBST), polybutylene succinate adipate (PBSA), and the like are used as biodegradable polymers, they have poor mechanical properties, such as crystallinity, as compared with non-degradable resins such as polyethylene terephthalate (PET).

In particular, a PLA resin is a thermoplastic polymer obtained by chemical synthesis of lactic acid produced through biological fermentation. Its production process is environmentally friendly, and the biodegradability of products made using it is superior to products made using conventional polymer resins. However, a PLA resin requires high-temperature conditions for biodegradation and has poor physical properties such as flexibility, which limits its application in various fields.

Meanwhile, a polyhydroxyalkanoate (PHA) resin is a biodegradable polymer that can be produced by numerous microorganisms, and it has recently attracted attention by virtue of its excellent biodegradability and biocompatibility. Research is ongoing to control the properties of PHA resins so that they can be applied to various fields.

Meanwhile, Korean Laid-open Patent Publication No. 2014-0106880 discloses a biodegradable resin composition having a controlled weight ratio of polylactic acid (PLA) and polybutylene adipate terephthalate (PBAT) and a biodegradable mulching film using the same. However, when PLA is blended with PBAT, its transparency and thermal properties are low, and it is difficult to secure the flexibility and strength required for processing, which limits its application.

### Disclosure of Invention

### Technical Problem

Accordingly, an embodiment aims to provide a biodegradable resin composition with excellent biodegradability and mechanical properties such as sufficient stretchability and strength for producing a stretched film, a biodegradable film using the same, and a process for preparing the same.

### Solution to Problem

According to an embodiment, there is provided a biodegradable resin composition that comprises a polylactic acid (PLA) resin; and a polyhydroxyalkanoate (PHA) resin, wherein the PHA resin comprises a first PHA resin comprising a 3-hydroxyhexanoate (3HH) repeat unit and a second PHA resin comprising a 4-hydroxybutyrate (4HB) repeat unit.

According to another embodiment, there is provided a biodegradable film prepared from a biodegradable resin composition, wherein the biodegradable resin composition comprises a polylactic acid (PLA) resin and a polyhydroxyalkanoate (PHA) resin, and the PHA resin comprises a first PHA resin comprising a 3-hydroxyhexanoate (3HH) repeat unit and a second PHA resin comprising a 4-hydroxybutyrate (4HB) repeat unit.

According to another embodiment, there is provided a process for preparing a biodegradable film that comprises preparing a biodegradable resin composition comprising a polylactic acid (PLA) resin and a polyhydroxyalkanoate (PHA) resin; melt-extruding the biodegradable resin composition to prepare an unstretched sheet; first stretching the unstretched sheet in a first direction and second stretching it in a second direction perpendicular to the first direction to prepare a stretched sheet; and heat-setting the stretched sheet at 110°C to 160°C to prepare a biodegradable film, wherein the PHA resin comprises a first PHA resin comprising a 3-hydroxyhexanoate (3HH) repeat unit and a second PHA resin comprising a 4-hydroxybutyrate (4HB) repeat unit.

### Advantageous Effects of Invention

As the biodegradable resin composition according to an embodiment comprises a polylactic acid (PLA) resin; and a polyhydroxyalkanoate (PHA) resin, wherein the PHA resin comprises a first PHA resin comprising a 3-hydroxyhexanoate (3HH) repeat unit and a second PHA resin comprising a 4-hydroxybutyrate (4HB) repeat unit, it is possible to enhance all of the biodegradability, stretchability, and tensile strength of a biodegradable film.

Accordingly, the biodegradable resin composition according to an embodiment is environmentally friendly as it is excellent in biodegradability and biocompatibility, while securing sufficient stretchability and strength to prepare a stretched film. Therefore, it can be utilized in the preparation of various products requiring moldability, such as disposable bags and packaging materials for food containers, while exhibiting excellent properties.

### Brief Description of Drawing

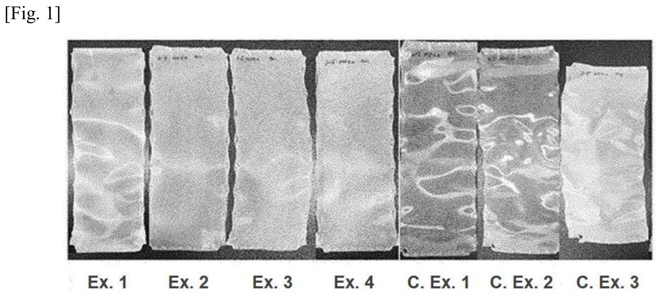

Fig. 1 shows the stretched sheets of Examples 1 to 4 and Comparative Examples 1 to 3 according to Test Example 1.

### Best Mode for Carrying out the Invention

Hereinafter, the present invention will be described in detail with reference to embodiments. However, the embodiments are not limited to those described below. Rather, they can be modified into various forms as long as the gist of the invention is not altered.

Throughout the present specification, when a part is referred to as "comprising" an element, it may be understood that other elements may be comprised, rather than other elements are excluded, unless specifically stated otherwise.

Throughout the present specification, the terms first, second, and the like are used to describe various components. But the components should not be limited by the terms. The terms may be used only for the purpose of distinguishing one component from another.

All numbers expressing the physical properties, dimensions, and the like of elements used herein are to be understood as being modified by the term "about" unless otherwise indicated.

The production process of a polylactic acid (PLA) resin, widely used as a biodegradable polymer, is environmentally friendly, and the biodegradability of products made using it is superior to products made using conventional polymer resins. However, a PLA resin has low transparency and does not have sufficient flexibility for processing, making it difficult to be applied to the production of packaging films. Specifically, since a PLA resin has high crystallinity and low flexibility, it would tear during the stretching process, whereby it cannot be manufactured into a film. Even if it is manufactured into a film, the film would be bent, which makes its appearance poor, resulting in low processability and productivity. In addition, a PLA film prepared from a PLA resin is easily cracked or broken upon impact at temperatures of 20°C or lower, and it tends to become mushy at temperatures of 35°C or higher, making it unsuitable for manufacturing packaging films. In addition, although a PLA resin has better biodegradability than conventional non-degradable resins, commercialization has been difficult because conditions such as high temperatures are required for biodegradation.

Meanwhile, a polyhydroxyalkanoate (PHA) resin is a biodegradable polymer that can be produced by numerous microorganisms, and it has recently attracted attention by virtue of its excellent biodegradability and biocompatibility. Since a PHA resin is produced by microorganisms, it may comprise numerous repeat units, and research is ongoing to control its properties by adjusting the type and content of the repeat units.

An embodiment aims to secure mechanical properties, stretchability, and the like of a film while optimizing the biodegradability of the film through a biodegradable resin composition comprising a PLA resin and a PHA resin.

Specifically, the biodegradable resin composition according to an embodiment comprises a polylactic acid (PLA) resin; and a polyhydroxyalkanoate (PHA) resin, wherein the PHA resin comprises a first PHA resin comprising a 3-hydroxyhexanoate (3HH) repeat unit and a second PHA resin comprising a 4-hydroxybutyrate (4HB) repeat unit. As a result, it is possible to achieve excellent biodegradability even at room temperature, along with enhanced stretchability and strength. That is, the biodegradable resin composition according to an embodiment is environmentally friendly as it is excellent in biodegradability and biocompatibility, while securing sufficient stretchability and strength to prepare a stretched film.

More specifically, the biodegradable resin composition according to an embodiment comprises a specific PLA resin and a PHA resin suitable therefor, which comprises a first PHA resin comprising a 3HH repeat unit and a second PHA resin comprising a 4HB repeat unit. When a biodegradable film is manufactured using the same, transparency and flexibility are secured, so that the appearance characteristics are excellent, while stretchability and processability are secured, so that tearing does not occur even during the stretching process. As a result, biodegradable films for packaging with high quality can be prepared.

### Biodegradable resin composition

According to an embodiment, there is provided a biodegradable resin composition, which comprises a polylactic acid (PLA) resin; and a polyhydroxyalkanoate (PHA) resin, wherein the PHA resin comprises a first PHA resin comprising a 3-hydroxyhexanoate (3HH) repeat unit and a second PHA resin comprising a 4-hydroxybutyrate (4HB) repeat unit.

The biodegradable resin composition according to an embodiment comprises a PLA resin.

Since the PLA resin, unlike petroleum-based resins, is based on biomass, renewable resources can be used. It emits less carbon dioxide, the main cause of global warming, during its production as compared with petroleum-based resins, and it is environmentally friendly as it is biodegraded by moisture and microorganisms when landfilled.

The PLA resin may comprise a repeat unit derived from L-lactic acid (L-lactic acid repeat unit), a repeat unit derived from D-lactic acid (D-lactic acid repeat unit), a repeat unit derived from D,L-lactic acid (D,L-lactic acid repeat unit), or a combination thereof.

Specifically, the PLA resin may be a random copolymer of L-lactic acid and D-lactic acid. In such an event, the content of the L-lactic acid repeat unit may be 80% by mole or more, 83% by mole or more, 85% by mole or more, 90% by mole or more, 93% by mole or more, 95% by mole or more, 98% by mole or more, or 99% by mole or more, and may be 80% by mole to 99.5% by mole, 83% by mole to 99% by mole, 85% by mole to 99% by mole, 90% by mole to 99% by mole, or 95% by mole to 99% by mole, based on the total number of moles of the repeat units contained in the PLA resin. As the content of the L-lactic acid repeat unit satisfies the above range, thermal resistance can be enhanced.

In addition, the content of the D-lactic acid repeat unit may be 1% by mole to 5% by mole, 1% by mole to 4% by mole, 2% by mole to 4% by mole, 1% by mole to 2% by mole, or 2% by mole to 3% by mole, based on the total number of moles of the repeat units contained in the PLA resin. When the content of the D-lactic acid repeat unit satisfies the above range, it may be advantageous from the viewpoint of enhancement in film stretching processability.

In addition, the PLA resin may have a weight average molecular weight (Mw) of 100,000 g/mole to 1,000,000 g/mole. In addition, the weight average molecular weight of the PLA resin may be 100,000 g/mole to 800,000 g/mole, 120,000 g/mole to 500,000 g/mole, or 150,000 g/mole to 300,000 g/mole. The weight average molecular weight may be measured by gel permeation chromatography (GPC). As the weight average molecular weight of the PLA resin satisfies the above range, mechanical properties for preparing films can be secured, and the thermal resistance of the films can be enhanced.

The PLA resin may have a glass transition temperature (Tg) of 30°C to 80°C and a melting temperature (Tm) of 100°C to 250°C, as measured by differential scanning calorimetry (DSC). For example, the glass transition temperature (Tg) of the PLA resin may be 35°C to 80°C, 40°C to 70°C, or 45°C to 65°C, and the melting temperature (Tm) thereof may be 105°C to 250°C, 110°C to 235°C, 120°C to 200°C, or 145°C to 185°C, as measured by differential scanning calorimetry (DSC).

The differential scanning calorimeter (DSC) may be Q2000 from TA Instruments. The DSC measurements are performed in a nitrogen (N₂) atmosphere.

Specifically, the glass transition temperature (Tg), melting temperature (Tm), and crystallization temperature (Tc) of the PLA resin may be measured from a heat flow curve obtained by performing a first scan (1^{st} scan), followed by a second scan (2^{nd} scan), in a differential scanning calorimeter (DSC) mode. More specifically, the heat flow curve may be obtained by heating from 40°C to 180°C at a rate of 10°C/minute, cooling to -50°C at a rate of 10°C/minute, and then heating from -50°C to 180°C at a rate of 10°C/minute. During the second scan procedure, Tg, Tc, and Tm are measured. In such an event, the heat of crystallization may be calculated from the integral at the crystallization temperature (Tc).

Meanwhile, the PLA resin may have a melt flow index (MI, 190°C and 2.13 kg) of 2 g/10 minutes to 5 g/10 minutes according to ISO 1133 and ASTM D1238. For example, the melt flow index (MI, 190°C and 2.13 kg) of the PLA resin may be 2.1 g/10 minutes to 4.8 g/10 minutes, 2.3 g/10 minutes to 4.5 g/10 minutes, 2.5 g/10 minutes to 4.2 g/10 minutes, or 2.6 g/10 minutes to 4 g/10 minutes, according to ISO 1133 and ASTM D1238.

The biodegradable resin composition according to an embodiment may comprise the PLA resin in an amount of 10% by weight or more. For example, the content of the PLA resin may be 12% by weight or more, 15% by weight or more, 20% by weight or more, 25% by weight or more, 35% by weight or more, 40% by weight or more, 50% by weight or more, 60% by weight or more, or 70% by weight or more, specifically, 10% by weight to 70% by weight, 12% by weight to 60% by weight, 15% by weight to 55% by weight, 15% by weight to 50% by weight, or 20% by weight to 45% by weight, based on the total weight of the biodegradable resin composition. As the content of the PLA resin satisfies the above range, the mechanical properties such as tensile strength and flexibility of films can be enhanced while the optical properties such as transparency and light transmittance thereof are not deteriorated.

The biodegradable resin composition according to an embodiment comprises a PHA resin.

A PHA resin is a natural thermoplastic polyester polymer that accumulates within microbial cells. The structure and physical properties of a PHA resin may be completely different depending on the types of repeat units (or monomers) that constitute the PHA resin.

Specifically, the PHA resin may be a copolymeric polyhydroxyalkanoate (PHA) resin. More specifically, it may be a copolymeric PHA resin with controlled crystallinity (crystallization).

For example, the PHA resin may comprise at least one repeat unit derived from monomers selected from the group consisting of 3-hydroxybutyrate (3HB), 3-hydroxyhexanoate (3HH), 4-hydroxybutyrate (4HB), 3-hydroxyvalerate (3HV), 3-hydroxypropionate (3HP), 5-hydroxyvalerate (5HV), 5-hydroxyhexanoate (5HH), and 6-hydroxyhexanoate (6HH). Specifically, the PHA resin may comprise at least one selected from the group consisting of a repeat unit derived from 3-hydroxybutyrate (3HB) (3HB repeat unit), a repeat unit derived from 3-hydroxyhexanoate (3HH) (3HH repeat unit), and a repeat unit derived from 4-hydroxybutyrate (4HB) (4HB repeat unit).

According to an embodiment, the PHA resin comprises a first PHA resin comprising a 3-hydroxyhexanoate (3HH) repeat unit and a second PHA resin comprising a 4-hydroxybutyrate (4HB) repeat unit. As the PHA resin comprises a first PHA resin comprising a 3-hydroxyhexanoate (3HH) repeat unit and a second PHA resin comprising a 4-hydroxybutyrate (4HB) repeat unit, mechanical properties such as tensile strength and flexibility, as well as stretchability suitable for the stretching process, can be enhanced.

The first PHA resin may be a random copolymer comprising a 3HH repeat unit and a 3HB repeat unit. For example, it may be a PHBH (poly(3HB-co-3HH)) comprising a 3HH repeat unit and a 3HB repeat unit.

The first PHA resin may comprise the 3HH repeat unit in an amount of 1% by mole to 10% by mole. For example, the first PHA resin may be a PHBH (poly(3HB-co-3HH)) comprising a 3HH repeat unit, wherein the 3HH repeat unit may be contained in an amount of 1.5% by mole to 9% by mole, 2.5% by mole to 8.5% by mole, 4% by mole to 8% by mole, or 5.5% by mole to 7% by mole, based on the total number of moles of the repeat units contained in the first PHA resin.

The first PHA resin may have a glass transition temperature (Tg) of -5°C to 35°C, a melting temperature (Tm) of 115°C to 160°C, and a crystallization temperature (Tc) of 12°C to 30°C, as measured by differential scanning calorimetry (DSC). In such an event, the heat of crystallization may be 10 J/g to 28 J/g.

For example, the first PHA resin may have a glass transition temperature (Tg) of - 3°C to 25°C, -1°C to 10°C, or 0°C to 5°C, a melting temperature (Tm) of 120°C to 155°C, 125°C to 150°C, or 135°C to 148°C, and a crystallization temperature (Tc) of 13°C to 29°C, 15°C to 28°C, or 20°C to 27°C, as measured by differential scanning calorimetry (DSC). In such an event, the heat of crystallization may be 12 J/g to 27.5 J/g, 15 J/g to 27 J/g, 20 J/g to 27 J/g, or 24 J/g to 27 J/g.

In addition, the first PHA resin may have a melt flow index (MI, 165°C and 5 kg) of 5 g/10 minutes to 25 g/10 minutes according to ISO 1133 and ASTM D1238. For example, the melt flow index (MI, 165°C and 5 kg) of the first PHA resin may be 6 g/10 minutes to 22 g/10 minutes, 8 g/10 minutes to 18 g/10 minutes, 10 g/10 minutes to 16 g/10 minutes, or 11 g/10 minutes to 14 g/10 minutes, according to ISO 1133 and ASTM D1238.

The PHA resin may comprise the first PHA resin in an amount of 20% by weight to 70% by weight. For example, the content of the first PHA resin may be 22% by weight to 65% by weight, 24% by weight to 60% by weight, 25% by weight to 55% by weight, or 26% by weight to 48% by weight, based on the total weight of the PHA resin.

The second PHA resin may be an amorphous PHA resin (aPHA) with controlled crystallinity and may be a random copolymer comprising a 4HB repeat unit and a 3HB repeat unit. For example, it may be an aPHA (poly(3HB-co-4HB)) comprising a 4-hydroxybutyrate (4HB) repeat unit and a 3-hydroxybutyrate (3HB) repeat unit.

The second PHA resin may comprise the 4HB repeat unit in an amount of 15% by mole to 60% by mole. For example, the second PHA resin may comprise the 4HB repeat unit in an amount of 20% by mole to 55% by mole, 25% by mole to 50% by mole, 28% by mole to 45% by mole, or 30% by mole to 40% by mole, based on the total number of moles of the repeat units contained in the second PHA resin. As the content of the 4HB repeat unit satisfies the above range, crystallinity can be easily controlled, whereby it is possible to further enhance stretchability and flexibility suitable for the stretching process. In addition, as a second PHA resin, in which the content of the 4HB repeat unit satisfies the above range, is employed, compatibility with a PLA resin can be further enhanced.

The second PHA resin may comprise the 3HB repeat unit in an amount of 20% by mole or more, 25% by mole or more, 35% by mole or more, 50% by mole or more, 60% by mole or more, or 75% by mole or more, based on the total number of moles of the repeat units contained in the second PHA resin.

The second PHA resin may have a glass transition temperature (Tg) of -25°C to 0°C as measured by differential scanning calorimetry (DSC). For example, the second PHA resin may have a glass transition temperature (Tg) of -20°C to -1°C, -15°C to -2°C, -20°C to -5°C, or -20°C to -10°C, as measured by differential scanning calorimetry (DSC).

In addition, the second PHA resin may have a melt flow index (MI, 190°C and 2.16 kg) of 5 g/10 minutes or less according to ISO 1133 and ASTM D1238. For example, the melt flow index (MI, 190°C and 2.16 kg) of the second PHA resin may be 3.5 g/10 minutes or less, 3 g/10 minutes or less, 2.5 g/10 minutes or less, or 2 g/10 minutes or less, according to ISO 1133 and ASTM D1238.

The PHA resin may comprise the second PHA resin in an amount of 60% by weight or less. For example, the content of the second PHA resin may be 50% by weight or less, 35% by weight or less, 25% by weight or less, or 20% by weight or less, specifically, 1% by weight to 60% by weight, 2% by weight to 50% by weight, 3% by weight to 35% by weight, 5% by weight to 30% by weight, 6% by weight to 25% by weight, or 8% by weight to 20% by weight, based on the total weight of the PHA resin. As the content of the second PHA resin satisfies the above range, transparency can be enhanced.

Meanwhile, the weight ratio of the first PHA resin to the second PHA resin may be 95:5 to 5:95. For example, the weight ratio of the first PHA resin to the second PHA resin may be 90:10 to 10:90, 90:10 to 50:50, or 85:15 to 60:40. As the weight ratio of the first PHA resin to the second PHA resin satisfies the above range, crystallinity can be readily controlled. As a result, it is possible to further enhance the compatibility with a PLA resin, along with stretchability and flexibility suitable for the stretching process, whereby the optical properties of a film can be enhanced.

According to an embodiment, the PHA resin may further comprise a third PHA resin comprising a 3-hydroxyhexanoate (3HH) repeat unit. Specifically, the PHA resin may comprise all of the first PHA resin to the third PHA resin.

The third PHA may be a random copolymer comprising a 3HH repeat unit and a 3HB repeat unit. For example, it may be a PHBH (poly(3HB-co-3HH)) comprising a 3HH repeat unit and a 3HB repeat unit. The third PHA resin and the first PHA resin may be different from each other in terms of the content of a 3HH repeat unit.

Specifically, the third PHA resin may comprise the 3HH repeat unit in an amount of 10% by mole to 20% by mole. For example, the third PHA resin may be a PHBH (poly(3HB-co-3HH)) comprising the 3HH repeat unit, wherein the 3HH repeat unit may be contained in an amount of 10% by mole to 18% by mole, 10.5% by mole to 15% by mole, or 11% by mole to 14% by mole, based on the total number of moles of the repeat units contained in the third PHA resin.

The molar ratio of the 3HH repeat units of the first PHA resin and the third PHA resin may be 1:0.5 to 5. For example, the molar ratio of the 3HH repeat units of the first PHA resin and the third PHA resin may be 1:0.6 to 4, 1:0.8 to 2.5, 1:1 to 2.3, or 1:1.2 to 2.

The third PHA resin may have a glass transition temperature (Tg) of -10°C to 10°C, a melting temperature (Tm) of 145°C to 190°C, and a crystallization temperature (Tc) of 35°C to 60°C, as measured by differential scanning calorimetry (DSC). In such an event, the heat of crystallization may be 25 J/g to 50 J/g.

For example, the third PHA resin may have a glass transition temperature (Tg) of -8°C to 5°C, -5°C to 3°C, or -3°C to 0.5°C, a melting temperature (Tm) of 150°C to 185°C, 152°C to 170°C, or 155°C to 168°C, and a crystallization temperature (Tc) of 36°C to 55°C, 38°C to 52°C, or 40°C to 50°C, as measured by differential scanning calorimetry (DSC). In such an event, the heat of crystallization may be 26 J/g to 45 J/g, 27 J/g to 40 J/g, 28 J/g to 35 J/g, or 29 J/g to 32 J/g.

In addition, the third PHA resin may have a melt flow index (MI, 165°C and 5 kg) of 0.5 g/10 minutes to 4.5 g/10 minutes according to ISO 1133 and ASTM D1238. For example, the melt flow index (MI, 165°C and 5 kg) of the third PHA resin may be 0.6 g/10 minutes to 4.2 g/10 minutes, 0.8 g/10 minutes to 4 g/10 minutes, 1.2 g/10 minutes to 3.8 g/10 minutes, or 2 g/10 minutes to 3.5 g/10 minutes, according to ISO 1133 and ASTM D1238.

The PHA resin may comprise the third PHA resin in an amount of 5% by weight to 30% by weight. For example, the content of the third PHA resin may be 6% by weight to 28% by weight, 8% by weight to 25% by weight, 10% by weight to 23% by weight, or 12% by weight to 20% by weight, based on the total weight of the PHA resin.

Meanwhile, the weight ratio of the first PHA resin to the third PHA resin may be 95:5 to 5:95. For example, the weight ratio of the first PHA resin to the third PHA resin may be 90:10 to 10:90, 85:15 to 25:75, 80:20 to 35:65, 75:25 to 45:55, or 70:30 to 50:50. As the weight ratio of the first PHA resin to the third PHA resin satisfies the above range, sufficient stretchability and strength for producing a stretched film can be secured simultaneously.

The biodegradable resin composition according to an embodiment may comprise the PHA resin in an amount of 30% by weight or more. For example, the content of the PHA resin may be 35% by weight or more, 45% by weight or more, 50% by weight or more, 60% by weight or more, 70% by weight or more, or 80% by weight or more, specifically, 30% by weight to 95% by weight, 35% by weight to 92% by weight, 40% by weight to 90% by weight, 45% by weight to 88% by weight, 50% by weight to 85% by weight, 60% by weight to 80% by weight, or 62% by weight to 75% by weight, based on the total weight of the biodegradable resin composition. As the content of the PHA resin satisfies the above range, the mechanical properties such as tensile strength and flexibility of films can be enhanced while the optical properties such as transparency and light transmittance thereof are not deteriorated.

The weight ratio of the PLA resin and the PHA resin may be 90:10 to 10:90. For example, the weight ratio of the PLA resin and the PHA resin may be 80:20 to 10:90, 70:30 to 10:90, 60:40 to 10:90, 55:45 to 15:85, 50:50 to 20:80, or 60:40 to 15:75. As the weight ratio of the PLA resin and the PHA resin satisfy the above range, it is possible to further enhance mechanical properties such as tensile strength and flexibility.

The biodegradable resin composition according to an embodiment may further comprise at least one additive selected from the group consisting of ultraviolet stabilizers, thermal stabilizers, antistatic agents, and dispersants.

The ultraviolet stabilizer may be at least one selected from the group consisting of benzophenone-based, benzotriazole-based, cyanoacrylate-based, and salicylic acid ester-based compounds, but it is not limited thereto. The content of the ultraviolet stabilizer may be 0.5% by weight to 2.5% by weight, 0.5% by weight to 2.0% by weight, 1.0% by weight to 2.0% by weight, or 1.5% by weight to 2.0% by weight, based on the total weight of the biodegradable resin composition.

The thermal stabilizer may be an iodine-based compound, but it is not limited thereto. The content of the thermal stabilizer may be 0.01% by weight to 5% by weight, 0.05% by weight to 4% by weight, 0.1% by weight to 3% by weight, 0.15% by weight to 3% by weight, 0.3% by weight to 2.5% by weight, or 0.5% by weight to 2.5% by weight, based on the total weight of the biodegradable resin composition.

The antistatic agent may be at least one selected from the group consisting of quaternary ammonium salts, metal salts, conductive polymers, metal oxides, surfactants, and carbon nanotubes, but it is not limited thereto. The content of the antistatic agent may be 0.01% by weight to 5% by weight, 0.05% by weight to 4% by weight, 0.1% by weight to 3% by weight, 0.15% by weight to 3% by weight, 0.3% by weight to 2.5% by weight, or 0.5% by weight to 2.5% by weight, based on the total weight of the biodegradable resin composition.

The dispersant may be at least one selected from the group consisting of polyacrylate-based compounds, polyurethane-based compounds, and polyester-based compounds, but it is not limited thereto. The content of the dispersant may be 0.25% by weight to 10% by weight, 0.3% by weight to 7% by weight, 0.3% by weight to 5% by weight, 0.5% by weight to 3% by weight, 1% by weight to 3% by weight, or 1.5% by weight to 2.5% by weight, based on the total weight of the biodegradable resin composition.

### Biodegradable film

According to another embodiment, there is provided a molded article prepared from the biodegradable resin composition.

Specifically, the molded article may be prepared by molding the biodegradable resin composition by a method known in the art such as extrusion or injection, and the molded article may be an injection molded article, an extrusion molded article, a thin film molded article, or a blown molded article, but it is not limited thereto.

In addition, the molded article may be in the form of a film or a sheet that can be used as agricultural mulching films, disposable gloves, or food packaging materials, in the form of a fiber that can be used as fabrics, knitted fabrics, nonwoven fabrics, ropes, or in the form of a container that can be used as a container for food packaging such as a lunch box.

Since the molded article is prepared from the biodegradable resin composition with excellent biodegradability and biocompatibility, as well as excellent strength and processability, it can exhibit excellent properties when applied to packaging products.

Specifically, the molded article prepared from the biodegradable resin composition can be used as an environmentally friendly packaging material. For example, the environmentally friendly packaging material may be in the form of a film or a sheet that can be used as common disposable films and food packaging materials, in the form of a fiber that can be used as fabrics, knitted fabrics, nonwoven fabrics, ropes, or in the form of a container that can be used as a container for food packaging such as a lunch box.

As an example, the biodegradable molded article may be composed of a biodegradable film prepared from the biodegradable resin composition or may comprise the biodegradable film.

According to another embodiment, the biodegradable film is prepared from a biodegradable resin composition, wherein the biodegradable resin composition comprises a polylactic acid (PLA) resin and a polyhydroxyalkanoate (PHA) resin, and the PHA resin comprises a first PHA resin comprising a 3-hydroxyhexanoate (3HH) repeat unit and a second PHA resin comprising a 4-hydroxybutyrate (4HB) repeat unit.

Details on the biodegradable resin composition, the PLA resin, and the PHA resin are as described above.

The biodegradable film may have an elongation of 300% or more. For example, the biodegradable film is measured for the maximum deformation just before fracture with a universal tester of INSTRON (model name: 4206) at a tensile speed of 200 mm/minute at a temperature of 60°C. The ratio of the maximum deformation to the initial length is calculated as the elongation. In such an event, the elongation in the longitudinal direction may be 320% or more, 350% or more, 360% or more, or 400% or more.

The biodegradable film may have a tensile strength of 10 kgf/mm² or less. For example, the biodegradable film is tested with a universal tester of INSTRON (model name: 4206) at a tensile speed of 200 mm/minute at a temperature of 60°C, and the tensile strength is measured with a program installed in the device. In such an event, the tensile strength may be 9 kgf/mm² or less or 8 kgf/mm² or less.

The biodegradable film may have a biodegradability of 40% or more under the conditions of 28°C and RH 50% according to ISO 14855. For example, the biodegradable film may have a biodegradability of 42% or more, 45% or more, 50% or more, 65% or more, 70% or more, 75% or more, 80% or more, or 90% or more, as calculated from a weight loss rate measured after 120 days under the conditions of 28°C and RH 50% according to ISO 14855.

The biodegradable film may have a biodegradability of 20% or more in seawater at 30°C according to ASTM D6691. For example, the biodegradable film may have a biodegradability of 25% or more, 30% or more, 33% or more, 35% or more, 38% or more, 40% or more, 45% or more, 50% or more, or 60% or more, as calculated from a weight loss rate measured after 198 days in seawater at 30°C according to ASTM D6691.

The biodegradable film may have a thickness of 5 µm to 200 µm. For example, the thickness of the biodegradable film may be 5 µm to 180 µm, 5 µm to 160 µm, 10 µm to 150 µm, or 15 µm to 130 µm.

### Process for preparing a biodegradable film

According to another embodiment, there is provided a process for preparing a biodegradable film, which comprises preparing a biodegradable resin composition comprising a polylactic acid (PLA) resin and a polyhydroxyalkanoate (PHA) resin; melt-extruding the biodegradable resin composition to prepare an unstretched sheet; first stretching the unstretched sheet in a first direction and second stretching it in a second direction perpendicular to the first direction to prepare a stretched sheet; and heat-setting the stretched sheet at 110°C to 160°C to prepare a biodegradable film. Here, the PHA resin comprises a first PHA resin comprising a 3-hydroxyhexanoate (3HH) repeat unit and a second PHA resin comprising a 4-hydroxybutyrate (4HB) repeat unit.

Details on the PLA resin and the PHA resin are as described above.

The biodegradable resin composition may be prepared by mixing the PLA resin and the PHA resin.

Thereafter, the biodegradable resin composition is melt-extruded at 170°C to 210°C to prepare an unstretched sheet. For example, the temperature at which the melt-extrusion is carried out may be 175°C to 210°C or 175°C to 200°C.

Thereafter, the unstretched sheet is first stretched in a first direction and then second stretched in a second direction perpendicular to the first direction to prepare a stretched sheet.

The first stretching may be carried out at a temperature of 60°C to 120°C at a stretching ratio of 2 times to 4 times. For example, the first stretching may be carried out at a temperature of 70°C to 110°C, 75°C to 105°C, or 80°C to 100°C, at a stretching ratio of 2.2 times to 4 times, 2.5 times to 3.8 times, or 2.5 times to 3.5 times. As the temperature and the stretching ratio of the first stretching satisfy the above ranges, it is possible to enhance stretchability.

The first direction may be the transverse direction (TD) or the longitudinal direction (MD). Specifically, the first direction may be the longitudinal direction (MD), and the second direction perpendicular to the first direction may be the transverse direction (TD).

After the first stretching, second stretching is carried out in a second direction perpendicular to the first direction. For example, the second stretching may be carried out at a temperature of 70°C to 140°C at a stretching ratio of 3 times to 5 times. For example, the second stretching may be carried out at a temperature of 70°C to 135°C, 72°C to 110°C, or 75°C to 100°C, at a stretching ratio of 3.1 times to 5 times, 3.2 times to 4.8 times, or 3.3 times to 4.8 times. As the temperature and the stretching ratio of the second stretching satisfy the above ranges, it is possible to enhance stretchability.

The ratio (d1/d2) of the stretching ratio in the first direction (d1) to the stretching ratio in the second direction (d2) may be 0.5 to 1. For example, the ratio (d1/d2) of the stretching ratio in the first direction (d1) to the stretching ratio in the second direction (d2) may be 0.5 to 0.95, 0.65 to 0.95, or 0.7 to 0.9.

Meanwhile, a preheating step or a coating step may be further carried out before the second stretching.

The preheating step may be carried out at 70°C to 120°C for 0.01 minute to 1 minute. For example, the preheating temperature may be 70°C to 120°C, 75°C to 115°C, or 80°C to 110°C, and the preheating time may be 0.01 minute to 1 minute, 0.05 minute to 0.5 minute, or 0.08 minute to 0.2 minute.

The coating step may be a step capable of imparting functionality, such as antistatic properties, to the biodegradable film and carried out by spin coating or in-line coating, but it is not limited thereto.

Finally, the stretched sheet is heat-set at 110°C to 160°C to prepare a biodegradable film. For example, the heat setting may be annealing and may be carried out at 125°C to 160°C, 130°C to 158°C, or 145°C to 155°C, for 1 second to 5 minutes or 1 second to 3 minutes. Upon completion of the heat setting, a procedure of gradually lowering the temperature may be carried out.

### Mode for the Invention

Hereinafter, the present embodiment will be described in more detail with reference to embodiments. However, these examples are provided only for illustration purposes, and the present embodiment is not limited thereto.

### [Example]

### Preparation of a biodegradable film

### Example 1

(1) Preparation of a biodegradable resin composition
   A first PHA resin and a second PHA resin were mixed at a weight ratio of 3:1 to prepare a polyhydroxyalkanoate (PHA) resin. A polylactic acid (PLA) resin and the PHA resin were mixed at a weight ratio of 40:60 to prepare a biodegradable resin composition. In such an event, the content of each resin in the biodegradable resin composition was 40% by weight of the PLA resin, 45% by weight of the first PHA resin, and 15% by weight of the second PHA resin.
   - PLA resin: a random copolymer of L-lactic acid and D-lactic acid with a content of the L-lactic acid repeat unit of 98% by mole, a weight average molecular weight of 190,000 g/mole, a glass transition temperature (Tg) of 58°C, a melting temperature (Tm) of 163.9°C, and a melt flow index (MI, 190°C and 2.16 kg) of 3.5 g/10 minutes according to ISO 1133 and ASTM D1238
   - First PHA resin: a PHBH comprising a 3HH repeat unit and a 3HB repeat unit with a content of the 3HH repeat unit of 6.53% by mole, a glass transition temperature (Tg) of 1°C, a melting temperature (Tm) of 145°C, a crystallization temperature (Tc) of 26.5°C, a heat of crystallization of 26.6 J/g, and a melt flow index (MI, 165°C and 5 kg) of 12 g/10 minutes according to ISO 1133 and ASTM D1238
   - Second PHA resin: a PHA comprising a 3HB repeat unit and a 4HB repeat unit with a content of the 4HB repeat unit of 33% by mole, a glass transition temperature (Tg) of -20°C to -10°C, and a melt flow index (MI, 190°C and 2.16 kg) of 2 g/10 minutes or less according to ISO 1133 and ASTM D1238
(2) Preparation of a biodegradable film

The biodegradable resin composition prepared in Example 1 was fed to an extruder and then melt-extruded at 190 °C through a T-die, which was cooled through a casting roll at 20 °C to prepare an unstretched sheet. Thereafter, the unstretched sheet was cut into 9 cm in width and 9 cm in length, which was first stretched in the MD direction at a stretching ratio of 3 times and then stretched in the TD direction at a stretching ratio of 4 times using a biaxial stretching machine at 80°C to prepare a stretched sheet. Thereafter, the stretched sheet was heat-set at 150°C for 10 seconds to prepare a biodegradable film.

### Examples 2 to 4 and Comparative Examples 1 to 3

A biodegradable resin composition and a biodegradable film were prepared in the same manner as in Example 1, except that the components and their contents were changed as shown in Table 1 below.
- Third PHA resin: a PHBH comprising a 3HH repeat unit and a 3HB repeat unit with a content of the 3HH repeat unit of 11.55% by mole, a glass transition temperature (Tg) of -1°C, a melting temperature (Tm) of 163°C, a crystallization temperature (Tc) of 45°C, a heat of crystallization of 30 J/g, and a melt flow index (MI, 165°C and 5 kg) of 3 g/10 minutes according to ISO 1133 and ASTM D1238

**[Table 1]**

| | PLA (% by weight) | PHA (% by weight) | | | Weight ratio of PLA:PHA | Weight ratio of the first and second PHAs |
|---|---|---|---|---|---|---|
| | | First PHA | Second PHA | Third PHA | | |
| Ex. 1 | 40 | 45 | 15 | - | 40:60 | 3:1 |
| Ex. 2 | 40 | 35 | 10 | 15 | 40:60 | 7:2 |
| Ex. 3 | 40 | 28 | 20 | 12 | 40:60 | 7:5 |
| Ex. 4 | 30 | 42 | 10 | 18 | 30:70 | 4.2:1 |
| C. Ex. 1 | 40 | 42 | - | 18 | 40:60 | - |
| C. Ex. 2 | 30 | 49 | - | 21 | 30:70 | - |
| C. Ex. 3 | 20 | 49 | 10 | 21 | 20:80 | 4.9:1 |

### Test Example 1: Stretchability

The unstretched sheets prepared in Examples 1 to 4 and Comparative Examples 1 to 3 were each stretched at a stretching ratio of 3 times in the MD direction at 70°C, and the central portion of the uniaxially stretched sheet was cut to a width of 1.5 cm and a length of 20 cm to prepare a sample. The thickness was measured every 20 points in the above sample, and the difference between the maximum thickness and minimum thickness was calculated to evaluate the stretchability based on the uniformity of the thickness. In addition, each sample was visually observed to determine the extent of shrinkage and whether any wrinkles or other abnormalities occurred on the surface.

**[Table 2]**

| | Thickness of the stretched sheet (µm) | | Difference in thickness (µm) |
|---|---|---|---|
| | Maximum | Minimum | |
| Ex. 1 | 308 | 149 | 159 |
| Ex. 2 | 205 | 183 | 22 |
| Ex. 3 | 205 | 195 | 10 |
| Ex. 4 | 290 | 143 | 147 |
| C. Ex. 1 | 374 | 126 | 248 |
| C. Ex. 2 | 362 | 134 | 228 |
| C. Ex. 3 | 417 | 140 | 277 |

As can be seen from Table 2 above, Examples 1 to 4 showed excellent stretchability as the difference between the maximum and minimum thicknesses of each stretched sheet was small. In contrast, Comparative Examples 1 and 2, in which the second PHA resin was not employed, showed a larger difference between the maximum and minimum thicknesses of the stretched sheet than Examples 1 to 4. In Comparative Example 3, although all of the first to third PHAs were employed, the weight ratio of PLA:PHA and/or the weight ratio of the first PHA resin and the second PHA resin did not satisfy the desired ranges. Thus, the difference between the maximum thickness and the minimum thickness of the stretched sheet was very large, resulting in low stretchability.

Fig. 1 shows the stretched sheets of Examples 1 to 4 and Comparative Examples 1 to 3 according to Test Example 1. As can be seen from Fig. 1, Examples 1 to 4 showed little shrinkage or surface curvature. Comparative Examples 1 and 2 showed deformation such as curvature on the surface as compared with Examples 1 to 4. In Comparative Example 3, surface curvature and shrinkage were prominent.

### Example 5

A biodegradable film was prepared in the same manner as in Example 2, except that, in step (2), only the first stretching was carried out at 80°C in the MD direction at a stretching ratio of 3.4 times.

### Examples 6 and 7 and Comparative Examples 4 to 8

A biodegradable resin composition and a biodegradable film were prepared in the same manner as in Example 5, except that the components and their contents were changed as shown in Table 3 below.

**[Table 3]**

| | PLA (% by weight) | PHA (% by weight) | | | Weight ratio of PLA:PHA | Weight ratio of the first and second PHAs |
|---|---|---|---|---|---|---|
| | | First PHA | Second PHA | Third PHA | | |
| Ex. 5 | 40 | 35 | 10 | 15 | 40:60 | 7:2 |
| Ex. 6 | 30 | 42 | 10 | 18 | 30:70 | 4.2:1 |
| Ex. 7 | 20 | 49 | 10 | 21 | 20:80 | 4.9:1 |
| C. Ex. 4 | 40 | 42 | - | 18 | 40:60 | - |
| C. Ex. 5 | 30 | 49 | - | 21 | 30:70 | - |
| C. Ex. 6 | 20 | 56 | - | 24 | 20:80 | - |
| C. Ex. 7 | 100 | - | - | - | - | - |
| C. Ex. 8 | - | 100 | - | - | - | - |

### Test Example 2: Biodegradability in marine environments

The stretched sheets prepared in Examples 5 to 7 and Comparative Examples 4 to 8 were each measured for biodegradability according to ASTM D6691. Specifically, each stretched sheet was immersed in seawater at 30°C, and the weight and thickness were measured for 198 days to calculate the thickness difference and weight loss rate.

The thickness and weight loss rate of Examples 5 to 7 before and after 198 days are shown in Table 4 below. Comparative Examples 7 and 8 showed no change at all in the thickness and weight before and after 198 days.

**[Table 4]**

| | Thickness (µm) | | | Weight loss rate (%) |
|---|---|---|---|---|
| | Day 0 | Day 198 | Difference in thickness | |
| Ex. 5 | 178 | 117 | 61 | 39 |
| Ex. 6 | 160 | 107 | 53 | 45 |
| Ex. 7 | 125 | 75 | 50 | 44 |
| C. Ex. 4 | 125 | 82 | 43 | 36 |
| C. Ex. 5 | 130 | 88 | 42 | 34 |
| C. Ex. 6 | 101 | 66 | 35 | 35 |

As can be seen from Table 4 above, Examples 5 to 7 showed excellent biodegradability in a marine environment as compared with Comparative Examples 4 to 6 in which the second PHA resin was not employed.

## Claims

1. A biodegradable resin composition, which comprises a polylactic acid (PLA) resin; and a polyhydroxyalkanoate (PHA) resin, wherein the PHA resin comprises a first PHA resin comprising a 3-hydroxyhexanoate (3HH) repeat unit and a second PHA resin comprising a 4-hydroxybutyrate (4HB) repeat unit.

2. The biodegradable resin composition of claim 1, wherein the first PHA resin comprises the 3HH repeat unit in an amount of 1% by mole to 10% by mole, and the second PHA resin comprises the 4HB repeat unit in an amount of 15% by mole to 60% by mole.

3. The biodegradable resin composition of claim 1, wherein the weight ratio of the first PHA resin to the second PHA resin is 95:5 to 5:95.

4. The biodegradable resin composition of claim 1, wherein the first PHA resin has a glass transition temperature (Tg) of -5°C to 35°C, a melting temperature (Tm) of 115°C to 160°C, a crystallization temperature (Tc) of 12°C to 30°C, and a heat of crystallization of 10 J/g to 28 J/g, as measured by differential scanning calorimetry (DSC), and a melt flow index (MI, 165°C and 5 kg) of 5 g/10 minutes to 25 g/10 minutes according to ISO 1133 and ASTM D1238.

5. The biodegradable resin composition of claim 1, wherein the second PHA resin has a glass transition temperature (Tg) of -25°C to 0°C, as measured by differential scanning calorimetry (DSC), and a melt flow index (MI, 190°C and 2.16 kg) of 5 g/10 minutes or less according to ISO 1133 and ASTM D1238.

6. The biodegradable resin composition of claim 1, wherein the PHA resin further comprises a third PHA resin comprising a 3-hydroxyhexanoate (3HH) repeat unit, and
the first PHA resin and the third PHA resin are different from each other in terms of the content of a 3HH repeat unit.

7. The biodegradable resin composition of claim 6, wherein the third PHA resin comprises the 3HH repeat unit in an amount of 10% by mole to 20% by mole.

8. The biodegradable resin composition of claim 6, wherein the molar ratio of the 3HH repeat units of the first PHA resin and the third PHA resin is 1:0.5 to 5.

9. The biodegradable resin composition of claim 6, wherein the third PHA resin has a glass transition temperature (Tg) of -10°C to 10°C, a melting temperature (Tm) of 145°C to 190°C, a crystallization temperature (Tc) of 35°C to 60°C, and a heat of crystallization of 25 J/g to 50 J/g, as measured by differential scanning calorimetry (DSC), and a melt flow index (MI, 165°C and 5 kg) of 0.5 g/10 minutes to 4.5 g/10 minutes according to ISO 1133 and ASTM D1238.

10. The biodegradable resin composition of claim 6, wherein the PHA resin comprises the third PHA resin in an amount of 5% by weight to 30% by weight.

11. The biodegradable resin composition of claim 1, wherein the PLA resin is a random copolymer of L-lactic acid and D-lactic acid, and it has a content of an L-lactic acid repeat unit of 80% by mole or more, a weight average molecular weight (Mw) of 100,000 g/mole to 1,000,000 g/mole,
a glass transition temperature (Tg) of 30°C to 80°C and a melting temperature (Tm) of 100°C to 250°C, as measured by differential scanning calorimetry (DSC), and
a melt flow index (MI, 190°C and 2.13 kg) of 2 g/10 minutes to 5 g/10 minutes according to ISO 1133 and ASTM D1238.

12. The biodegradable resin composition of claim 1, wherein the weight ratio of the PLA resin and the PHA resin is 90:10 to 10:90.

13. A biodegradable film, which is prepared from a biodegradable resin composition, wherein the biodegradable resin composition comprises a polylactic acid (PLA) resin and a polyhydroxyalkanoate (PHA) resin, and
the PHA resin comprises a first PHA resin comprising a 3-hydroxyhexanoate (3HH) repeat unit and a second PHA resin comprising a 4-hydroxybutyrate (4HB) repeat unit.

14. The biodegradable film of claim 13, wherein the biodegradable film has an elongation of 300% or more, a tensile strength of 10 kgf/mm² or less, a biodegradability of 40% or more under the conditions of 28°C and RH 50% according to ISO 14855, and a biodegradability of 20% or more in seawater at 30°C according to ASTM D6691.

15. A process for preparing a biodegradable film, which comprises:
preparing a biodegradable resin composition comprising a polylactic acid (PLA) resin and a polyhydroxyalkanoate (PHA) resin;
melt-extruding the biodegradable resin composition to prepare an unstretched sheet;
first stretching the unstretched sheet in a first direction and second stretching it in a second direction perpendicular to the first direction to prepare a stretched sheet; and
heat-setting the stretched sheet at 110°C to 160°C to prepare a biodegradable film,
wherein the PHA resin comprises a first PHA resin comprising a 3-hydroxyhexanoate (3HH) repeat unit and a second PHA resin comprising a 4-hydroxybutyrate (4HB) repeat unit.
